# EUROPÄISCHE PATENTSCHRIFT

(11) **EP 3 833 229 B1**
(45) Veröffentlichungstag und Bekanntmachung des Hinweises auf die Patenterteilung: **05.01.2022**
(21) Anmeldenummer: 19773810.7
(22) Anmeldetag: 23.09.2019
(51) Int. Cl.: A47J 37/06

(54) **SYSTEM ZUR ZUBEREITUNG UND DARREICHUNG VON NAHRUNGSMITTELN**
SYSTEM FOR PREPARING AND PRESENTING FOOD
SYSTÈME DE PRÉPARATION ET DE DISTRIBUTION D'ALIMENTS

(30) Priorität: 21.09.2018 DE 202018105430 U
(43) Veröffentlichungstag der Anmeldung: 16.06.2021
(73) Patentinhaber: IP ideas production GmbH & Co. KG, 53604 Bad Honnef (DE)
(72) Erfinder: BIRKENSTOCK, Christian, 53545 Linz am Rhein (DE)
(74) Vertreter: btb IP Bungartz Baltzer Partnerschaft mbB Patentanwälte
(86) Internationale Anmeldenummer: PCT/EP2019/075482
(87) Internationale Veröffentlichungsnummer: WO 2020/058526

(56) Entgegenhaltungen:
- GB-A- 2 307 159
- JP-A- 2013 146 217
- US-A- 2 670 296
- US-A- 3 736 859
- US-A- 3 863 020
- US-A- 4 137 333

## Beschreibung

Die Erfindung betrifft ein System zur Zubereitung von Nahrungsmitteln.

Systeme zur Darreichung und Zubereitung von Nahrungsmitteln auf die verschiedenste Weise sind allgemein bekannt. Im einfachsten Fall werden Nahrungsmittel als Nahrungsmittelblock in den Handel gegeben. Dies können beispielsweise Patties, also Scheiben aus Hackfleisch, Geflügel, Fleischersatzstoffen oder sonstigen Lebensmitteln für die Zubereitung von Hamburgern, oder auch in Würfelform eingefrorene Lebensmittel, wie zum Beispiel Spinat, sein, die portionsweise aus einer Verpackung entnommen werden können. Auch Käse wird beispielsweise als Schmelzkäse zum Überbacken von Lebensmitteln ebenso wie Blätterteig oder andere Lebensmittel scheibenweise angeboten.

Die verschiedenen Darreichungsformen der Lebensmittel sind bei der täglichen Verarbeitung sehr hilfreich, haben aber den Nachteil, dass auf diese Weise nur einzelne Komponenten zur Weiterverarbeitung angeboten werden. Insbesondere fehlt es oft an einer Abstimmung, sowohl in der Form als auch in der Menge der Einzelkomponenten, so dass der Benutzer in einer Umverpackung eine Mehrzahl von Nahrungsmittelblöcken bereithalten muss, die nach Entnahme einzelner Nahrungsmittelblöcke dann geöffnet oder wieder verschlossen gelagert werden muss. Dies ist aus nachvollziehbaren Gründen nur in Verbindung mit tiefgekühlten oder getrockneten Lebensmitteln über längere Zeit möglich.

Aus der US 4 137 333 A ist ein System zur Darreichung von Nahrungsmitteln bekannt, bei der ein Sandwich in eine wärmeleitfähige Umhüllung eingelegt und nachfolgend gegart wird. Weitere Verfahren zur Zubereitung von Lebensmitteln sind aus der GB 2 307 159 A, der US 2 670 296 A, der US 3 863 020 A und der JP 2013 146217 A bekannt. Die US 2 670 296 A beschreibt dabei die Herstellung und Zubereitung von Fleischscheiben (Patties) mit eingebrachten Durchlässen zur besseren Wärmeeinbringung. Aus der US 3 736 859 A ist ein Gargerät in Form eines Heizgerätes mit einer beheizbaren Garaufnahme zur Zubereitung von Nahrungsmitteln (z.B. Steaks) bekannt. Eine weitere, das Lebensmittel während der Zubereitung formende Garform ist aus der US 3 863 020 A bekannt. Die oben genannten bekannten Systeme und Garformen haben den Nachteil, dass sie auf einen sehr speziellen Zweck zugeschnitten sind. Hilfreich wäre aber ein System, bei dem die Zubereitung eines fertigen Gerichtes durch Abgabe von hinsichtlich des Inhalts und des Gewichts aufeinander abgestimmten Mengen vereinfacht wird. Zwar existieren seit einiger Zeit Lieferdienste, die exakt die Menge Lebensmittel, die bei Abarbeitung eines Rezeptes benötigt wird, anliefern, dies hat aber den Nachteil, dass der Benutzer erst nach dem Auswählen des gewünschten Rezeptes die Lebensmittel bestellen kann und dass ein vergleichsweise hoher Verpackungs- und Lieferaufwand notwendig wird. Auch wird dem Benutzer zwar auf diese Weise genau die Menge des Lebensmittels bereitgestellt, die er zum Nachkochen des Rezeptes benötigt, das Kochen an sich wird jedoch nicht vereinfacht.

Ferner ist eine vergleichsweise lange Vorlaufzeit für die Bestellung nach Aussuchen des gewünschten Rezeptes notwendig und der Benutzer muss natürlich zu Hause sein, um die teils gekühlte oder gar tiefgekühlte Ware in Empfang nehmen und geeignet lagern zu können. Schließlich erfordert das Anliefern der Ware einen hohen Transport- und Verpackungsaufwand, da die einzelnen Zutaten schnell versandt und zugestellt werden müssen, wenn es sich um verderbliche Waren handelt und üblicherweise dann einzeln verpackt sind.

Die zuvor beschriebenen Nachteile führen dazu, dass die bekannten Systeme zur Darreichung von Nahrungsmitteln nicht geeignet sind, um spontan und einfach eine Speise zuzubereiten.

Aufgabe der Erfindung ist es daher, ein System zur Zubereitung von Nahrungsmitteln zu schaffen, bei dem sowohl die Lagerhaltung als auch die Auswahl der notwendigen Komponenten bei möglichst großer Vielzahl von Variationen für die Zubereitung einer Speise vereinfacht ist und gleichzeitig die Zubereitung bei möglichst geringem Zeitaufwand leicht gelingt. Ferner soll das System geeignet sein, möglichst frische und gesunde Lebensmittel bereitzustellen und gleichzeitig trotz der vorkonfigurierten Bereitstellung ein besonderes Erlebnis bei Zubereitung und Genuss des fertigen Gerichtes mit sich zu bringen, das sich deutlich von üblichen Fertiggerichten unterscheiden soll.

Diese Aufgabe wird nach der Erfindung durch ein System zur Zubereitung von Nahrungsmitteln nach Anspruch 1 gelöst. Die Unteransprüche betreffen vorteilhafte Ausgestaltungen des Systems.

Das erfindungsgemäße System zur Zubereitung von Nahrungsmitteln umfasst zunächst die Grundidee, einzelne Blöcke der Nahrungsmittel oder unterschiedlichster Formen von Nahrungsmitteln herzustellen und zur Verarbeitung bereitzustellen. Dabei ist schon die Formgebung der einzelnen Nahrungsmittelblöcke etwas Besonderes und schafft für den Verbraucher einen Erinnerungswert bzw. einen Markenwert, mit dem er die Qualität und die weiteren Vorzüge des Systems schon über die Form erkennen kann. Die Nahrungsmittelblöcke des Systems sind bevorzugt in Größe und Funktion aufeinander abgestimmt. Ein weiterer Grundgedanke des erfindungsgemäßen Systems besteht darin, geeignete Zubereitungsvorrichtungen in Form von Heizgeräten bereitzustellen, über die die erfindungsgemäß ausgerüsteten Nahrungsmittelblöcke besonders leicht und schonend gegart werden können.

So können Gruppen von Nahrungsmittelblöcken mit gleicher Form vorliegen oder Bausätze aus einem Blockkern und weiteren Lebensmittellagen vorliegen, aus denen dann ein Nahrungsmittelblock zusammengesetzt werden kann.

Denkbar ist zum Beispiel, dass der Benutzer in einer Umverpackung unterschiedliche Lebensmittellagen und ggfs. auch unterschiedliche Blockkerne bevorratet und sich im Bedarfsfall das gewünschte Produkt nach Geschmack wunschgemäß zusammenstellen kann. Die so hergestellten Nahrungsmittelblöcke oder ausgewählte, massive Nahrungsmittelblöcke werden weiterverarbeitet oder zubereitet oder können auch schon verzehrfertig vorliegen, je nach Art des darin enthaltenen Lebensmittels und der Lagerung.

Die Arten der Lebensmittel, die über dieses System dargereicht werden, sind weitgehend nicht eingeschränkt. Es können somit auf diese Weise alle Formen von Lebensmitteln den Verbraucher isoliert voneinander oder im Rahmen von Zusammenstellungen zur Zubereitung von speziellen Speisen nach einem bereitgestellten Rezept dargereicht werden. Nachfolgend wird die Erfindung anhand einzelner, besonders bevorzugter Beispiele dargestellt, wobei die Vielfalt der beschriebenen Varianten schon erkennen lässt, dass der Anwendungsbereich der Erfindung im Wesentlichen nicht eingeschränkt ist.

Im einfachsten Fall beinhaltet ein Nahrungsmittelblock ein einzelnes Lebensmittel oder die Zubereitung eines Lebensmittels. Dies kann zum Beispiel in Form gepresstes Fleisch, in die jeweilige Form zugeschnittenes Fleisch, geformtes Hackfleisch oder eine mehr oder weniger homogene Mischung aus Fleischkomponenten mit weiteren Komponenten, insbesondere Gewürzen, Saucenanteil oder ähnlichem sein. Anstelle von Fleisch können natürlich auch Fisch, Wildbret oder vegetarische Komponenten, zum Beispiel Tofu, auf gleiche Weise angeboten werden. Auch Nahrungsmittelblöcke aus Gemüse, Reis, Teigwaren oder sonstigen Komponenten, insbesondere Soßenkomponenten oder Würzkomponenten, können auf diese Weise zu Lebensmittelblöcken geformt sein. Die Lebensmittel, die in diesem Lebensmittelblock enthalten sind, können roh, vorgegart oder durchgegart zu dem Lebensmittelblock verarbeitet werden.

Eine Besonderheit der Erfindung liegt nun neben der Zusammensetzung des Lebensmittelblocks auch in der Form des Lebensmittelblocks. Neben dem Wiedererkennungswert, dass der Nahrungsmittelblock zum erfindungsgemäßen System gehört, ermöglicht die Form insbesondere weitere Vorteile. So ist in dem Nahrungsmittelblock wenigstens eine Durchgangsöffnung vorgesehen, die sowohl zu Zubereitungszwecken als auch gegebenenfalls zu weiteren Zwecken genutzt werden kann.

Über die Formgebung kann der Nahrungsmittelblock zunächst günstiger und besser erhitzt werden. Ein mittiges oder außermittiges Durchgangsloch ermöglicht es, die Gartemperatur günstiger in den Nahrungsmittelblock einzubringen. Schon beim normalen Erhitzen auf einer klassischen Herd- oder Grillplatte kann über dieses Durchgangsloch die Hitze in den Kern des Nahrungsmittelblockes eindringen und so schneller ein Durchgaren ermöglichen. Besonders bevorzugt ist es jedoch, wenn die Oberfläche zum Erhitzen des Nahrungsmittelblockes Erhebungen aufweist, die in das Durchgangsloch hineinragen und so ein Garen, zusätzlich zum Garen über die Auflagefläche ausgehend von dem Zentrum des Nahrungsmittelblocks ermöglichen. Dieser Effekt kann natürlich verstärkt werden, wenn weitere Durchgangslöcher vorgesehen sind.

Zusätzlich zum oben beschriebenen Beschleunigungseffekt des Garens kann über die Oberflächengestaltung der Nahrungsmittelblöcke die Einkopplung der Gartemperatur in den Nahrungsmittelblock optimiert werden. So können beispielsweise Vertiefungen, die über die Oberfläche des Nahrungsmittelblocks verteilt sind, lokale Maxima der eingekoppelten Wärme bereitstellen. Je nach gewünschtem Garverhalten des Nahrungsmittelblocks kann also die Oberfläche des Nahrungsmittelblocks eben, konkav oder konvex gerundet oder auch mit Vertiefungen, insbesondere in Form von konkaven Einsenkungen oder Rillen, ausgebildet sein. Umgekehrt können natürlich auch Erhebungen vorgesehen sein, um trotz einer ebenen Grillplatte zum Beispiel ein Grillmuster nach der Art eines Rosts oder sonstige Muster, insbesondere Logos, Dekorationen, etc, erzeugen zu können.

Die Nahrungsmittelblöcke können beinahe jede beliebige Form aufweisen. Am günstigsten werden quaderförmige oder scheibenförmige bzw. zylindrische Nahrungsmittelblöcke sein. Je nach Anwendungsfall können aber auch ausgefallenere Formen Verwendung finden, insbesondere wenn dies aus Marketinggründen gewünscht sind oder wenn die Zusammenstellung der Lebensmittel zum späteren Verzehr oder für die Zubereitung eine solche Form nahelegen. So können beispielsweise für Kinder Formen nach der Art eines Gesichtes oder sonstige ausgefallene Formen gewählt werden. Sollen über die Nahrungsmittelblöcke ganze Gerichte zusammengestellt werden, die, wie später noch beschrieben werden wird, nach gemeinsamer Zubereitung der Nahrungsmittelblöcke und Auseinanderfallen auf einem Teller als in Aussehen und Geschmack attraktives Tellergericht bereitgestellt werden können, können auch Formen gewählt werden, die auf die spätere Positionierung der Einzelkomponenten auf dem Teller Rücksicht nehmen.

Weiterhin können die Nahrungsmittelblöcke auch weitere Öffnungen oder sonstige Details der Formgebung aufweisen. So kann zum Beispiel ein quer zur Durchgangsöffnung verlaufender Durchlass vorgesehen sein, so dass sich die Nahrungsmittelblöcke zum Beispiel auf einen Spieß für das spätere Grillen auffädeln lassen. In diesem Fall sind die Nahrungsmittelblöcke dann bevorzugt quaderförmig, kugelförmig oder als Zylinderscheiben ausgebildet, so dass der Benutzer zum Beispiel eine Vielzahl solcher Nahrungsmittelblöcke bereithalten kann und zur Herstellung des gewünschten Spießes dann unterschiedliche Arten von Nahrungsmittelblöcken zu einem attraktiven Grillspieß zusammenstellen kann. Aufgrund der gleichförmigen Form der einzelnen Nahrungsmittelblöcke können diese leicht gelagert werden und nehmen zum Beispiel im Tiefkühlschrank wenig Platz weg.

Die Nahrungsmittelblöcke können aber nicht nur homogen aus einem Material oder einem Materialgemisch bestehen. Ein weiterer bevorzugter Aspekt der Erfindung beinhaltet auch die Tatsache, dass der Nahrungsmittelblock entweder bereits herstellerseitig aus mehreren Lagen besteht oder dass dem Benutzer mehrere Lagen bereitgestellt werden können, so dass er sich die Zusammensetzung des Nahrungsmittelblocks selbst wählen kann. So kann beispielsweise ein Nahrungsmittelblock eine mittlere Fleisch- oder Gemüselage aufweisen, wobei diese dann oben und unten über weitere Zusatzlagen abgedeckt sein kann. Die Zusatzlagen können Würzlagen oder Lagen aus einem anderen Lebensmittel sein. Hier kommen insbesondere zum Beispiel Teigwaren oder auch Brot nach der Art eines Buns eines Hamburgers in Betracht. Auch Käse oder Speck können über diese zusätzliche Lebensmittellage zugefügt werden.

Auch hier kann der Benutzer, sofern der mehrlagige Nahrungsmittelblock nicht bereits vorkonfiguriert ausgeliefert wird, ein Sortiment erhalten, so dass er die einzelnen Lebensmittellagen selbst auswählen und zusammenstellen kann. Bevorzugt ist dabei eine Dicke der Lebensmittellagen, die so gewählt ist, dass sich für alle möglichen Kombinationen eine möglichst einheitliche Garzeit und Gartemperatur ergibt, so dass die Fehlerwahrscheinlichkeit deutlich reduziert wird. Dies vereinfacht die Zubereitung des fertigen Lebensmittels deutlich und sorgt für eine gesteigerte Benutzerzufriedenheit.

Die einzelnen Lebensmittellagen können bevorzugt Oberflächen aufweisen, die derart aufeinander abgestimmt sind, dass sich in Querrichtung zur Oberfläche der Lagen ein Formschluss ergibt. Hierüber kann ausgeschlossen werden, dass sich bei der Zubereitung oder auch beim späteren Verzehr die einzelnen Lebensmittellagen relativ zueinander verschieben. Gleichzeitig kann zum Beispiel bei Würzlagen auch eine gesteigerte Eindringtiefe der Würze in die benachbarte Lage realisiert werden. Schließlich kann natürlich über diese Formgebung auch eine Selbstzentrierung beim Zusammensetzen des aus den einzelnen Lebensmittellagen bestehenden Nahrungsmittelblocks oder auch eine Zwangsausrichtung, sofern es hierauf ankommt, realisiert werden.

Ein konkretes Lebensmittel, das auf diese Weise hergestellt werden kann, kann zum Beispiel der bereits erwähnte Hamburger sein. Dieser weist dann eine zentrale Lebensmittellage auf, die von einem Hackfleisch-Patty gebildet ist. Dem Benutzer kann dann ein System bereitgestellt werden, das weitere optionale Lebensmittellagen umfasst, wobei dieses System dann die üblichen Zutaten für einen Hamburger beinhalten kann. Beispielsweise können dies Speckscheiben, Käsescheiben und die abdeckenden Brotscheiben sein. Aber auch innovative Lösungen können über das System bereitgestellt werden. So kann zum Beispiel ein asiatisch anmutender Burger auch ein Fisch-Patty und zusätzliche Lebensmittellagen in Form von Algen oder sonstigen Zutaten umfassen.

Soßen, Röstzwiebeln, Peperoni oder Jalapeno-Stücke können entweder in einer Lage enthalten sein, was sich insbesondere bei tiefgefrorenen Nahrungsmittelblöcken anbietet, sie können aber auch in einer Matrix eingebettet sein, die entweder bei der späteren Zubereitung zerfällt oder Teil des fertigen Produktes bleibt. So kann zum Beispiel eine Sauce als eingebettete Lage in das Fleisch-Patty integriert sein. Die Komponenten können aber auch in einer Lage aus starrem Speisefett enthalten sein, die dann gleichzeitig bei der Zubereitung das notwendige Fett für einen saftigen Burger bereitstellt.

Ein weiteres konkretes Produkt kann zum Beispiel eine Lasagne sein. So können oberhalb und unterhalb einer zentralen Lage aus mit Sauce vermischtem Hackfleisch eine Käselage und eine Teigwarenlage angeordnet sein, so dass der so aufgebaute Stapel erhitzt werden kann und anschließend eine fertige Lasagne vorliegt. Auch hier kann ein System für die Selbstkonfiguration durch den Benutzer bereitgestellt werden, dass beispielsweise statt der Lage mit dem Hackfleisch eine Lage mit Fisch, eine vegetarische Lage mit Tofu-Anteilen oder eine Gemüselage vorsieht. So kann der Benutzer selbst die gewünschte Menge an Käse, eventuelle weitere Zutaten und die Hauptkomponente wählen. Gewürze können entweder in einer der Lagen, insbesondere in der Käselage, enthalten sein oder zwischen die Lagen gestreut werden oder als separate Würzlage zugeführt werden.

Sowohl die Nahrungsmittelblöcke als auch, sofern die Nahrungsmittelblöcke aus einem Blockkern und Lebensmittellagen zusammengesetzt werden, die jeweiligen Einzelschichten, können aus Scheiben von Lebensmitteln oder sonstigen Zutaten bestehen. Auch lose Gebinde können in Form gebracht und anschließend tiefgefroren, über Haftvermittler, insbesondere geronnenes Eiweiß oder sonstige verbindende, lebensmittelechte Stoffe miteinander verbunden werden. Auch einfaches Tiefkühlen ist natürlich möglich. Dabei können die Nahrungsmittelblöcke oder die einzelnen Schichten so ausgebildet sein, dass sie während des Auftauens oder bei der Zubereitung fest bleiben oder zerfallen. Dies ist jeweils vom Anwendungsgebiet abhängig, je nachdem ob die Grundform des Nahrungsmittelblockes erhalten bleiben soll oder der Eindruck entstehen soll, dass von vornherein ein loses Lebensmittel verarbeitet wurde.

So kann es beispielsweise sein, dass der Benutzer drei Nahrungsmittel aus dem Tiefkühlschrank entnimmt und auf einem Teller anordnet, den er anschließend zum Beispiel in der Mikrowelle erwärmt. Ein Fleischverbund kann seine Form behalten, während ein Reis- und ein Gemüseverbund zerfallen und so auf dem Teller in einer üblichen Form präsentiert werden. Auch innerhalb eines Nahrungsmittelblockes können Schichten während der Zubereitung stabil bleiben und andere Schichten so ausgebildet sein, dass sie sich verflüssigen oder zerfallen. So kann beispielsweise die oberste Lebensmittellage im tiefgefrorenen Zustand fest sein, nach dem Auftauen aber soßenartig über die unteren Schichten zerfließen. Gleiches gilt für mittlere Schichten, die sich nicht unbedingt verflüssigen müssen, sondern lediglich weich werden können, so wie es zum Beispiel bei der mittleren Lage einer Lasagne der Fall ist.

Die einzelnen Nahrungsmittelblöcke, die Lebensmittellagen oder der Blockkern können auch aus gepresstem Fleisch bestehen, wobei dies entweder in einer bekannten Weise geschehen kann, so dass während der Zubereitung der Fleischverbund weiterhin aneinander haftet und der Eindruck eines zusammenhängenden Stückes Fleisch entsteht oder dass der Fleischverbund beim Erhitzen oder schon beim Auftauen auseinander fällt. Um diese Effekte zu steuern kann eine Beschichtung der Wandung der einzelnen Bestandteile des Fleischverbundes gewählt werden, die entweder zum Beispiel durch aufgebrachte Proteine einen größeren Haftverbund erzeugt oder durch entsprechende Trennmittel genau das Gegenteil bewirkt, was zum Beispiel durch eine ölige oder fetthaltige Beschichtung erzielt werden kann.

Ferner können im System auch größere Nahrungsmittelblöcke vorgesehen werden, die Sollbruchstellen umfassen können. Hier kann sich der Benutzer dann jeweils ein Stück abbrechen, entweder vor oder nach der Zubereitung, um den gewünschten Grundstoff zu erhalten.

Bevorzugt umfasst ein erfindungsgemäßes System te+eine Vielzahl von unterschiedlichen Komponenten in Form von Nahrungsmittelblöcken, Lebensmittellagen und Blockkernen. Diese können je nach Anwendungswunsch ausgewählt und miteinander kombiniert werden. Beispielsweise können dann die jeweils gewünschten Komponenten entweder parallel zueinander zubereitet werden, übereinandergestapelt werden oder auch auf Spieße aufgesteckt werden.

Die Nahrungsmittelblöcke können, wie oben beschrieben, zum Zusammenstellen von einem Lebensmittel, von Tellergerichten oder einem Verbund von Lebensmitteln, wie zum Beispiel in Form des Spießes, verwendet werden. Auch rein dekorative Anwendungen, zum Beispiel als Eiswürfel ohne weitere Funktion zur Ergänzung des Spektrums des Systems, sind möglich. Ferner können die Nahrungsmittelblöcke bereits verzehrfertig sein oder so ausgebildet sein, dass sie durch Auftauen, Erhitzen oder Kühlen oder auf sonstige Weise noch individuell zubereitet werden.

Weitere Merkmale und Vorteile der Erfindung ergeben sich aus der nachfolgenden Beschreibung bevorzugter Ausführungsbeispiele anhand der Zeichnungen.

In den Zeichnungen zeigt:
- Fig. 1: ein Heizgerät zur Verwendung in Verbindung mit dem erfindungsgemäßen System,
- Fig. 2: eine erste Ausgestaltung eines erfindungsgemäßen Nahrungsmittelblocks,
- Fig. 3: den in Figur 2 dargestellten Nahrungsmittelblock in einer Draufsicht,
- Fig. 4: den in den Figuren 2 und 3 dargestellten Nahrungsmittelblock in einer Seitenansicht im Schnitt,
- Fig. 5: eine Abwandlung des in den Figuren 2 bis 4 dargestellte Nahrungsmittelblocks,
- Fig. 6: einen weiteren Nahrungsmittelblock mit Vertiefungen und Sollbruchstellen,
- Fig. 7: ein mit dem erfindungsgemäßen System aufgebautes Nahrungsmittel,
- Fig. 8: das in Figur 7 dargestellte Nahrungsmittel in einer Explosionsdarstellung,
- Fig. 9: einen aus erfindungsgemäßen Nahrungsmittelblöcken zusammengestellten Grillspieß und
- Fig. 10: ein passives Heizgerät zur Verwendung mit einem System nach der Erfindung.

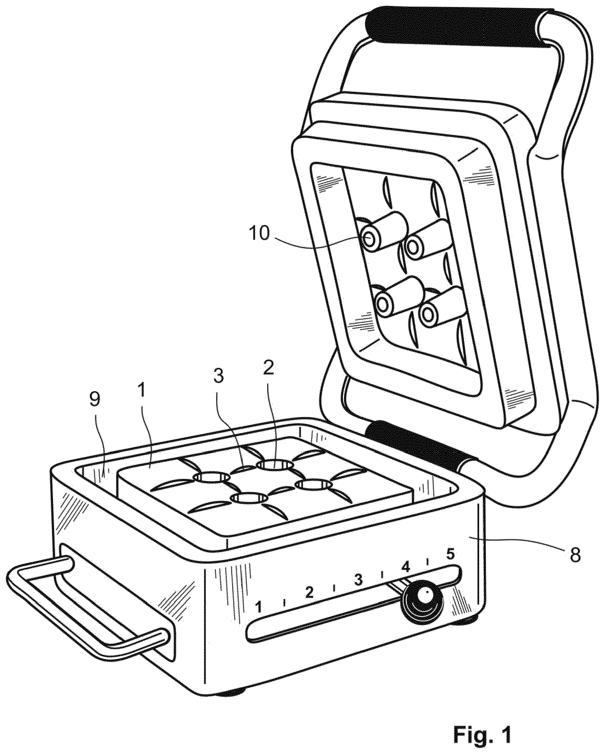

In Figur 1 ist ein Heizgerät 8 zur Verwendung in Verbindung mit dem erfindungsgemäßen System dargestellt. Das Heizgerät 8 ist hier nach der Art eines Waffeleisens ausgebildet und weist beispielhaft nur eine Aufnahme 9 zur Aufnahme eines Nahrungsmittelblocks 1 auf. Selbstverständlich ist hier die Kombinationsvielfalt beinahe unbeschränkt; es können beliebig viele Aufnahmen 9 nebeneinander oder hintereinander, im Abstand zueinander oder ineinander übergehend vorgesehen sein. Zur einfacheren Darstellung wird hier das kleinste Heizgerät 8 mit nur einer Aufnahme 9 beschrieben.

Das Heizgerät 8 weist einen unteren Grundkörper auf, der hier auf der rechten Seite einen Schieberegler zur Einstellung der Temperatur oder der Heizdauer aufweisen kann. Es können natürlich auch zwei getrennte Regler für die beiden Funktionen vorgesehen sein. Insbesondere kann auch eine Zeitschaltung vorgesehen sein, die das Heizgerät 8 nach Erreichen einer vorgegebenen oder eingestellten Heizdauer selbsttätig abschaltet, einen Alarm ausgibt und/oder selbsttätig den Deckel öffnet, der dann unter Vorspannung einer Federvorrichtung geschlossen ist. Bei einer aufwändigeren Lösung können diese Funktionen von einer Steuerelektronik gesteuert werden, wobei optional auch eine Lesevorrichtung vorgesehen sein kann, über die das Heizgerät 8 die notwendigen Zubereitungsregelungen oder ganze Rezepte einlesen kann. Eine solche Lesevorrichtung kann insbesondere ausgebildet sein, um einen QR-Code, einen Barcode oder eine sonstige codierte Anweisung einlesen zu können.

Im in Figur 1 dargestellten Fall ist das Gerät nur mit einem Schieberegler versehen. Im Grundkörper ist ein unterer Teil der Aufnahme 9 für den Nahrungsmittelblock 1 in Form einer Einsenkung in die Oberfläche des Grundkörpers vorgesehen. Der Grundkörper selbst ist quaderförmig ausgebildet und weist vier Standfüße sowie einen vorderen Griff zum Handling auf, der thermoisoliert sein kann, damit er sich nicht erhitzt. Gleiches gilt natürlich für die Wandung des Grundkörpers.

Der Deckel ist mit dem Grundkörper gelenkig verbunden. Bevorzugt ist diese Verbindung derart ausgebildet, dass sich ein Hebescharnier ergibt, also ein Scharnier, das den Deckel nicht ausschließlich rotatorisch bewegt sondern eine vorgelagerte, translatorische Bewegung bietet. Dies hat den Vorteil, dass die Öffnung des Deckels das zubereitete Nahrungsmittel nicht beschädigt.

Im Deckel selbst ist der obere Teil der Aufnahme 9 vorgesehen. Hier springen von der Oberseite nach unten Heizdorne 10 hervor, die beim Absenken des Deckels in die Durchgangsöffnungen 2 im Nahrungsmittelblock 1 eintauchen. Die Heizdorne 10 sind in der Größe an die Kontur der Durchgangsöffnung 2 angepasst. Dies vermeidet einen Luftspalt zwischen der Wandung der Durchgangsöffnung 2 und dem Heizdorn 10, wodurch der Wärmeübergang optimiert wird. Da aber kein Spalt zwischen dem Heizdorn 10 und der Innenwandung der Durchgangsöffnung 2 vorliegt, ist es ratsam, den Heizdorn 10 zunächst translatorisch aus der Durchgangsöffnung 2 herauszuziehen. Hierzu ist das oben beschriebene Hebescharnier vorgesehen, wobei natürlich eine solche translatorische Bewegung des Deckels auch anderweitig realisiert werden kann. Die translatorische Bewegung sollte so groß sein, dass der Heizdorn 10 hierüber mit dem größten Bereich aus der Durchgangsöffnung 2 herausgezogen wird. Sie kann etwas kleiner gehalten werden, wenn der Heizdorn 10 nach unten konisch zuläuft, da sich dann ja bereits bei einer kleinen Öffnungsbewegung ein Spalt ergibt.

Alternativ kann der Heizdorn 10 natürlich auch im Falle eines Heizgerätes 8, das einen reinen Schwenkdeckel aufweist, auch an die Schwenkbewegung in seiner Form angepasst sein, so dass sich der Heizdorn 10 aus der Durchgangsöffnung 2 entlang der Wandung der Durchgangsöffnung 2 beim Öffnen des Deckels herausdreht. Zusätzlich oder alternativ hierzu kann auch die Innenkontur der Durchgangsöffnung 2 entsprechend geformt sein.

Das in Figur 1 dargestellte Heizgerät 8 ist Teil eines Systems zur Zubereitung von Nahrungsmitteln. Dieses System verwendet im Wesentlichen Nahrungsmittelblöcke 1, die für dieses System optimiert sind. Dies können alle Formen von Nahrungsmitteln sein, die entweder durch Kühlen oder durch Erhitzen zubereitet werden. Auch Mischungen von Nahrungsmitteln, die weiter unten noch beschrieben werden, kommen hier in Betracht. Das Erhitzen kann sowohl ein Erhitzen über eine Grill- oder ähnliche Ofenfunktion sein als auch ein Erhitzen im Wasserbad, beispielsweise nach der sogenannten Sous-Vide-Kochtechnik.

Bei einer weiteren Alternative ist das Heizgerät 8 derart ausgebildet, dass der Heizdorn 10 nach einer vordefinierten oder einstellbaren Garzeit selbsttätig in die Ebene der Grilloberfläche zurückgezogen wird, wobei bevorzugt die Grilloberfläche schräg angeordnet ist und unterhalb der Grilloberfläche eine Auffangschale für fertiggegarte Nahrungsmittelblöcke 1 vorgesehen ist.

Bei Verwendung der Sous-Vide-Kochtechnik wird der Nahrungsmittelblock 1 in einem Heizgerät 8 erhitzt, dass ein temperaturgeführtes Wasserbad aufweist. Auch hier können Heizdorne 10 Verwendung finden, die dann natürlich zur Schonung der Folie, mit der die Nahrungsmittelblöcke 1 unter Einsatz der Vakuumiertechnik umhüllt sind, auf eine geringere Temperatur erhitzt werden. Die Temperaturführung des Wasserbades kann bei diesem Gerät entweder ausschließlich über die Heizdorne 10 oder auch über eine separate Heizvorrichtung erfolgen.

Zum Einkapseln der Nahrungsmittelblöcke 1 werden diese zunächst in einen geeigneten Folienbeutel eingebracht, der dann vakuumiert wird. Nachfolgend kann dann über einen Pressstempel im Bereich der Durchgangsöffnung 2 die Folie, möglicherweise auch unter Einsatz von Wärme, durch die Durchgangsöffnungen hindurchgedrückt werden, in diesem Bereich gestanzt werden und anschließend verschweißt werden.

Damit dies ohne Einzug von Luft erfolgt, geschieht dies am besten unter Vakuum. Alternativ kann natürlich auch der Nahrungsmittelblock 1 einseitig mit einer Folie belegt werden, die entweder vorher bereits mit entsprechender Formgebung versehen ist oder die nach dem Belegen in die Durchgangsöffnung 2 und durch diese hindurch niedergedrückt wird, wobei anschließend die gegenüberliegende Seite und die Ränder ebenfalls mit Folie belegt werden und die Folien dann verschweißt werden. Sofern die Durchgangsöffnungen 2 frei bleiben sollen, kann anschließend die Folie in diesem Bereich ausgestanzt werden. Letztlich ist die Art der Produktion der in Vakuumbeutel eingeschweißten Nahrungsmittelblöcke 1 eine Frage der herzustellenden Stückzahlen.

Nicht unter Vakuum in Folie versiegelte Nahrungsmittelblöcke 1 können unmittelbar zubereitet werden. Der besondere Vorteil der Erfindung besteht darin, dass durch die Verwendung der Heizdorne 10 die Wärme unmittelbar auch in den Nahrungsmittelblock 1 eingebracht werden kann, so dass in Verbindung mit der Tatsache, dass der Nahrungsmittelblock 1 eine recht geringe Dicke aufweist, eine schnelle und zuverlässige Zubereitung möglich wird. Insbesondere kann der Nahrungsmittelblock 1 auch tiefgefroren in die Heizgeräte 8 eingebracht werden und so aus dem tiefgefrorenen Zustand Verzehr fertig zubereitet werden.

Für die Zubereitung des Nahrungsmittelblocks 1 wird das Heizgerät 8 entsprechend gesteuert. Dies kann manuell geschehen oder auch unter Verwendung von vorprogrammierten Abläufen, wie dies beispielsweise aus dem Bereich der Dampfgarer heute bereits bekannt ist. Vorprogrammierte Abläufe bieten sich insbesondere dann an, wenn beispielsweise ein Nahrungsmittelblock 1 zunächst aufgetaut werden soll und es anschließend unter höherer Hitze gegrillt werden soll. Eine Phase geringerer Wärme zu Beginn der Zubereitung verhindert dabei ein Übergaren der äußeren Schichten. Auch kann der Benutzer natürlich den Gargrad bei solchen Abläufen wählen und die Programmierung der Steuerung zuverlässig dafür Sorge tragen, dass das gewünschte Ergebnis erzielt wird.

Sofern das Einprogrammieren der Abläufe nicht bereits werksseitig in die Steuerung des Heizgerätes 8 integriert wurde, kann dies entweder über einen Benutzerdialog, den die Elektronik über geeignete Eingabemittel mit dem Benutzer führt oder auch über das automatisierte Einlesen eines Ablaufes in das Heizgerät 8 erfolgen. Eine beispielhafte Ausgestaltung für ein solches automatisiertes Einlesen besteht im Einlesen eines Codes, beispielsweise eines QR-Codes oder eines Barcodes. Dies kann entweder bereits das unmittelbare Einlesen der Abläufe bedeuten, die dann im Code hinterlegt sind, oder auch nur das Einlesen einer Referenz sein, beispielsweise einer Internetadresse, über die die benötigten Daten vom Heizgerät 8 automatisiert abgerufen werden können.

Eine vorteilhafte Weiterbildung der Erfindung verwendet eine externe Software, auch in Form einer auf einem Smartphone oder einem Tablet hinterlegten App, um die Zubereitung zu erleichtern. In dieser Software können Rezepte und auch Steuerungsanweisungen hinterlegt sein. Dies ermöglicht es dem Benutzer neben dem Zugriff auf Ideensammlungen, in bestimmten Fällen die Zubereitung zu beeinflussen, beispielsweise durch Auswahl eines Gargrades oder durch Wahl einer mehr oder weniger krossen Oberfläche. Auch kann natürlich die Software dem Benutzer während der Zubereitung Anweisungen geben. So kann beispielsweise der Benutzer aufgefordert werden, hintereinander verschiedene Nahrungsmittelblöcke in das Heizgerät 8 einzugeben, entweder nebeneinander oder aufeinander gestapelt.

Soll zum Beispiel ein aus Fleisch bestehender Nahrungsmittelblock mit Käse überbacken werden, kann der Benutzer aufgefordert werden, nach einer ersten Garzeit die Käsescheibe aufzulegen. Auch kann der Benutzer aufgefordert werden, das Heizgerät 8 nach einer ersten Garphase oder zu Beginn der Zubereitung zu öffnen, um einen schonenden Garprozess ohne Grillfunktion zu ermöglichen. Der Vielfalt sind hier so gut wie keine Grenzen gesetzt, letztlich hängt dies von der Art des Lebensmittels und des jeweiligen Rezeptes ab. Natürlich können die Anweisungen auch über andere Quellen, beispielsweise Kochbücher oder eine Internetseite oder auch über das Heizgerät 8 selbst bereitgestellt werden. Die Anweisungen können automatisiert in das Heizgerät 8 übertragen werden oder dem Benutzer nur visuell oder über Tonausgabe angezeigt werden. Insbesondere das anweisungskonforme Steuern des Heizgerätes 8 wird aber eine besonders vorteilhafte Lösung darstellen, da hier eine Fehlbedienung, zum Beispiel durch eine falsche Temperaturwahl, von vornherein vermeidbar ist.

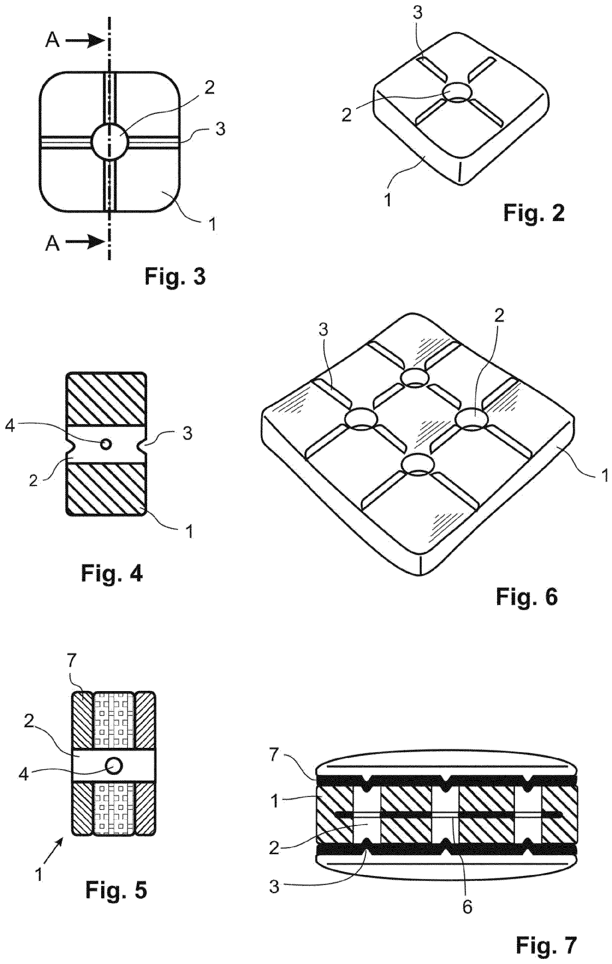

In Figur 2 und in Figur 3 ist jeweils ein Nahrungsmittelblock 1 zur Verwendung in Verbindung mit dem erfindungsgemäßen System dargestellt, der eine zentrale Durchgangsöffnung 2 aufweist. Der Nahrungsmittelblock 1 weist die Grundform eines Quaders auf und besitzt an seiner Oberfläche sowie seiner Unterseite (hier nicht sichtbar) Vertiefungen 3. Diese Vertiefungen 3 können dazu dienen, um an diesen Stellen die Hitze eines Gargerätes besser in die Oberfläche einzukoppeln. Die gleiche Funktion kann die Durchgangsöffnung 2 übernehmen.

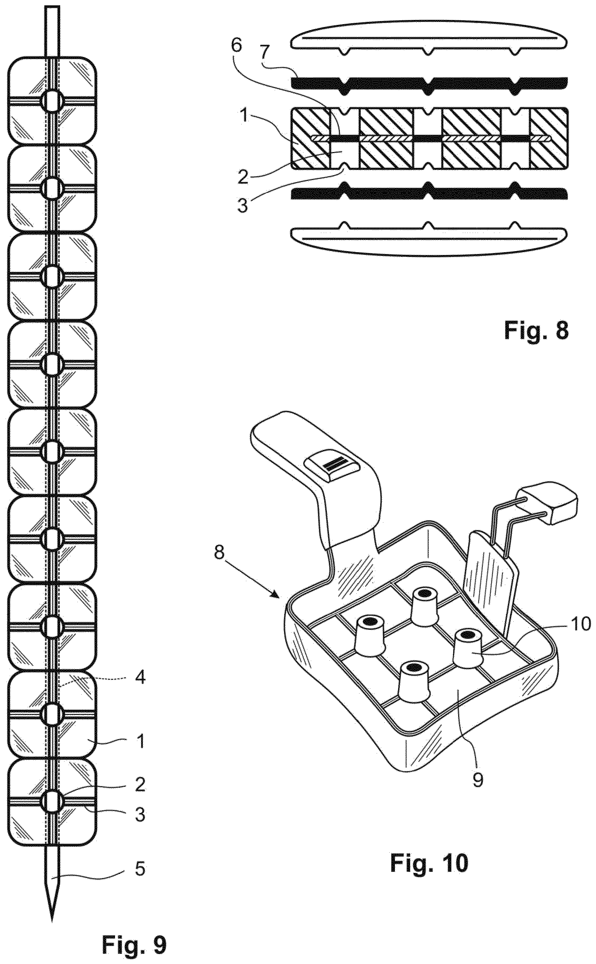

Figur 4 zeigt den Schnitt A-A aus Figur 2. Hier ist zu erkennen, dass der Nahrungsmittelblock 1 rechtwinklig zur Durchgangsöffnung 2 einen Durchlass 4 aufweist. Dieser Durchlass 4 kann zum Beispiel genutzt werden, um, wie aus Figur 9 ersichtlich ist, einen Spieß 5 durch den Nahrungsmittelblock 1 hindurch zu stecken. Dies kann dazu dienen, um wunschgemäß aus dem Tiefkühlschrank oder dem Kühlschrank die gewünschte Art der Nahrungsmittelblöcke 1 auszuwählen und zu einem dann auf dem Grill zuzubereitenden Grillspieß zusammenzustellen. Dabei können die Nahrungsmittelblöcke Fleisch, Fisch, Gemüse oder auch Obst enthalten oder hieraus bestehen.

In Figur 5 ist eine Abwandlung eines Nahrungsmittelblocks 1 dargestellt, der einen Blockkern und Lebensmittellagen 7 aufweist. Ein solcher Nahrungsmittelblock 1 kann vorgefertigt sein, wobei dann die einzelnen Schichten des Nahrungsmittelblocks 1 bevorzugt schon werkseitig so ausgebildet sind, dass sie fest aneinanderhaften. Dies kann über eine Proteinverbindung, über tiefgefrieren nach dem Zusammenfügen oder über sonstige Maßnahmen, insbesondere über einen Haftvermittler, erfolgen. Auch dieser Nahrungsmittelblock 1 weist eine zentrale Durchgangsöffnung 2 auf, die sich durch den gesamten Nahrungsmittelblock 1 hindurch erstreckt. Dies ist aber nicht unbedingt notwendig. Sofern zum Beispiel die Lebensmittellagen 7 bei der Zubereitung flüssig werden, könnte die Durchgangsöffnung 2 auch nur im Bereich des Blockkerns vorgesehen sein. Auch hier ist ein Durchlass 4 zum Aufstecken auf einen Spieß 5 vorgesehen.

Figur 6 zeigt eine weitere Form des Nahrungsmittelblocks 1. Hier besteht der Nahrungsmittelblock 1 aus einem größeren Grundkörper, der, wie auch schon die in den Figuren 2 bis 5 dargestellten Nahrungsmittelblöcke 1, an seiner Oberseite und seiner Unterseite Vertiefungen 3 aufweist. Hier können die Vertiefungen 3 als Sollbruchstellen dienen, so dass der Nahrungsmittelblock 1 durch Abbrechen von einzelnen Teilen in Teilblöcke zerlegt werden kann. Dies kann vor der Zubereitung oder auch erst während des Verzehrs erfolgen. Die Vertiefungen 3 können eine beliebige Tiefe aufweisen und sich, wie im gezeigten Ausführungsbeispiel, vom Rand zu den Durchgangsöffnungen 2 erstrecken. Sofern keine Durchgangsöffnungen 2 vorgesehen sind, können die Vertiefungen 3 auch von Rand zu Rand verlaufen.

In den Figuren 7 und 8 ist eine beispielhafte Anwendung des erfindungsgemäßen Systems zur Darreichung und Zubereitung von Nahrungsmitteln wiedergegeben. Hier wird ein Nahrungsmittelblock 1 dadurch hergestellt, dass ein Blockkern mit weiteren Lebensmittellagen 7 kombiniert wird.

Der Blockkern weist eine Füllung 6 auf, die zum Beispiel eine Sauce bereitstellen kann. Auch eine Gewürzfüllung kann natürlich eingebracht werden. Bei einem Ausführungsbeispiel ist der Blockkern ein Fleisch-Patty. Oberhalb und unterhalb der Oberseite des Blockkerns sind hier beispielhaft jeweils zwei Lebensmittellagen 7 vorgesehen, wobei beispielsweise eine obere und eine untere Lebensmittellage 7, die direkt an den Blocckern anliegen, als Käseschicht und/oder in Form von Speck. Letztlich ist hier dem Gestaltungsspielraum keine Grenze gesetzt. Im gezeigten Beispiel ist darunter und darüber jeweils eine Lebensmittellage 7 vorgesehen, die als Brotscheibe oder Bun-Hälfte (=Hälfte eines Burgerbrötchens) ausgebildet ist.

Die einzelnen Lebensmittellagen 7 sowie der Blockkern sind mit Prägungen versehen, so dass sich in Querrichtung eine formschlüssige Verbindung des Stapels ergibt. Auf diese Weise kann zum Beispiel das lästige Herausrutschen des Blockkerns beim Verzehr des hamburgerartigen Nahrungsmittels verhindert werden.

Figur 9 zeigt, wie oben bereits erwähnt, eine weitere bevorzugte Anwendung der Erfindung. Hier sind mehrere Nahrungsmittelblöcke 1 hintereinander aufgereiht auf einem Spieß 5 angeordnet. Auch diese Nahrungsmittelblöcke 1 weisen Durchgangsöffnungen 2 und Vertiefungen 3 auf, wobei der Spieß 5 durch Durchlässe 4 in den Nahrungsmittelblöcken 1 hindurch gesteckt ist. Die Vertiefungen 3 sowie die Durchgangsöffnungen 2 können hier genutzt werden, um die Hitze eines Grills optimal in die Nahrungsmittelblöcke 1 einzuleiten. Die Durchgangsöffnungen 2 können ferner genutzt werden, um zum Beispiel eine Grillsauce hier zu deponieren, die bei Erhitzen dann aus dem von der Durchgangsöffnung 2 gebildeten Reservoir herausfließt. Auch Speisefett kann hier deponiert werden, so dass der Grillspieß ohne weitere Fettzugabe in einer Pfanne zubereitet werden kann.

Figur 10 zeigt eine alternative Ausgestaltung eines Heizgerätes 8. Bei dieser Ausgestaltung ist das Heizgerät 8 als passives Heizgerät 8 ausgebildet. Das Heizgerät wird beispielsweise verwendet, um in einem Ofen oder in einer Pfanne erhitzt zu werden. Es können auch spezielle Geräte verwendet werden, die beispielsweise eine rechteckige Aufnahmeform oder Auflage aufweisen, auf die die in Figur 10 dargestellten Heizgeräte 8 nebeneinander und/oder hintereinander aufgesetzt werden können.

Zum Aufheizen des in Figur 10 dargestellten Heizgerätes 8 wird dieses insbesondere von unten über Wärmeleitung erhitzt. Der Nahrungsmittelblock 1 wird im dargestellten Ausführungsbeispiel, die Aufnahme 9 vollständig füllend, von oben in das Heizgerät 8 eingelegt. Alternativ kann natürlich die Aufnahme 9 auch so ausgebildet sein, dass mehrere Nahrungsmittelblöcke 1 nebeneinander eingesetzt werden können.

Der Nahrungsmittelblock 1 wird innerhalb der Aufnahme, wie auch bei vielen anderen Ausgestaltungen der Erfindung, über die Wärmeleitung der Heizdorne 10 und über die Wärmeeinbringung von unten bzw. über die Seitenwandung der Aufnahme 9 aufgeheizt und gegart. Die Heizdorne 10 können hierzu spezielle Kerne oder Beschichtungen aufweisen, die hinsichtlich der Wärmeleitung optimiert sind. Gleiches gilt natürlich für den Bodenbereich, der zum Beispiel nach der Art einer Bratpfanne mit einer Wabenstruktur versehen sein kann. Auch die Wandung kann entsprechend ausgestattet sein. Alle Bereiche, die mit den Nahrungsmittelblock 1 in Verbindung kommen, sind bevorzugt mit einer Anti-Haft-Beschichtung versehen. Dies kann beispielsweise eine Beschichtung aus PTFE-Kunststoff, auch unter dem Handelsnamen Teflon bekannt, sein.

Im rechten Bereich des Heizgerätes 8 ist eine Entnahmevorrichtung vorgesehen. Der Nahrungsmittelblock 1 kann auf eine auf den Heizdorn 10 aufsteckbare Scheibe mit den hier dargestellten Erhebungen zum Eintauchen in die Vertiefungen 3 des Nahrungsmittelblocks 1 aufgelegt werden, wobei diese Scheibe dann mit dem rechts dargestellten Handgriff in die Aufnahme 9 eingelegt wird. Die Scheibe weist natürlich entsprechende Ausnehmungen zum Durchlass der Heizdorne 10 auf. Als Alternative können die Heizdorne 10 auch an der Scheibe angeordnet sein oder in höckerartigen Erhebungen an der Scheibe eingreifen. Dies hat den Vorteil, dass der Benutzer nach der Zubereitung des Nahrungsmittelblocks 1 diesen besonders einfach herausnehmen kann und den zubereiteten Nahrungsmittelblock 1 seitlich von der Scheibe abstreifen oder durch Umdrehen der Scheibe von dieser lösen kann. Auch hier sind alle Teile, die der Benutzer bestimmungsgemäß anfasst, mit einer thermoisolierenden Eigenschaft versehen.

Das erfindungsgemäße System kann für vielfältigste Nahrungsmittel verwendet werden, wobei hier besonders interessant ist, dass der Benutzer erkennt, dass das Grundsystem immer das gleiche ist und dass die bei ihm vorhandene Qualitätserwartung hierdurch erfüllt werden kann. So kann der Nahrungsmittelblock 1 auch ein Reisblock sein, wobei zum Beispiel zum Aufbau eines Sushi-ähnlichen Nahrungsmittels in der Durchgangsöffnung 2 eine Fischkomponente vorgesehen sein kann. Hierzu kann natürlich die Durchgangsöffnung 2 entsprechend größer ausgebildet sein. Alternativ kann auch eine Würzmarinade vorgesehen sein, während die Fischkomponente als obere Lebensmittellage 7 vorgesehen wird.

### Bezugszeichenliste:

- 1: Nahrungsmittelblock
- 2: Durchgangsöffnung im Nahrungsmittelblock
- 3: Vertiefung im Nahrungsmittelblock
- 4: Durchlass im Nahrungsmittelblock
- 5: Spieß
- 6: Füllung
- 7: Lebensmittellage
- 8: Heizgerät
- 9: Aufnahme
- 10: Heizdorn

## Patentansprüche

1. System zur Zubereitung von Nahrungsmitteln, die nach einem System zur Darreichung von Nahrungsmitteln bereitgestellt sind, wobei das System eine Mehrzahl von einzelnen zubereitungsfertigen Nahrungsmittelblöcken (1) und/oder zusammenhängenden Nahrungsmittelblöcken (1) umfasst, die jeweils aus zumindest einem Nahrungsmittel bestehen und in eine Grundform geformt sind, die wenigstens eine, in den Nahrungsmittelblock (1) eingeformte Durchgangsöffnung (2) aufweist, **wobei**
das System ein Gargerät in Form eines Heizgerätes (8) mit einer als Garaufnahme dienenden Aufnahme (9) für einen oder eine Mehrzahl von Nahrungsmittelblöcken (1) aufweist, wobei die Aufnahme (9) einen thermisch leitfähigen Trägerkörper mit einer Auflage für zumindest eine Oberfläche eines Nahrungsmittelblocks (1) und einen von der Auflage (9) rechtwinklig hervorspringenden Heizdorn (10) aufweist, der derart dimensioniert ist, dass er in die Durchgangsöffnung (2) einsteckbar ist, wobei das Heizgerät ein aktives Heizgerät (8) mit einer integrierten Heizvorrichtung oder ein passives Heizgerät (8) zum Einsetzen in eine externe Garvorrichtung ist und wobei der Heizdorn (10) in seiner Formgebung an die Durchgangsöffnung (2) im Nahrungsmittelblock (1) angepasst ist.

2. System nach Anspruch 1, **dadurch gekennzeichnet, dass** die Aufnahme (9) zwei gegeneinander anstellbare Grillroste aufweist, zwischen die ein oder mehrere Nahrungsmittelblöcke (1) spannbar sind und der Heizdorn (10) insbesondere eine Länge aufweist, die der Tiefe der Durchgangsöffnung (2) im Nahrungsmittelblock (1) entspricht.

3. System nach einem der vorhergehenden Ansprüche, **dadurch gekennzeichnet, dass** die Nahrungsmittelblöcke (1) als Eingangskomponente für die Zubereitung aus mehreren rohen oder vorgegarten Lebensmittellagen (7) und einem aus einem Nahrungsmittel oder einem Nahrungsmittelgemisch bestehenden Blockkern zusammengesetzt sind, wobei die Lebensmittellagen (7) und der Blockkern eine gleiche Grundfläche oder eine Grundfläche aufweisen, die um maximal 20% in der Längs- und Querausdehnung der Grundfläche des Blockkerns oder einer anderen Lebensmittellage (7) abweicht.

4. System nach dem vorhergehenden Anspruch, **dadurch gekennzeichnet, dass** die Lebensmittellagen (7) Fleischlagen, Fischlagen, Würzlagen, Käse- oder Specklagen, Schokoladelagen, Zuckerlagen, Teigwarenlagen und/oder Brotlagen sind, aus denen wenigstens ein, bevorzugt mehrere Nahrungsmittelblöcke (1) aus mehreren, übereinander angeordneten Lebensmittellagen (7) zusammensetzbar ist.

5. System nach einem der beiden vorhergehenden Ansprüche, **dadurch gekennzeichnet, dass** der Blocckern und die Lebensmittellagen (7) nach dem Übereinanderstapeln insbesondere über miteinander korrespondierende, eingeprägte und/oder erhabene Bereiche in Querrichtung formschlüssig miteinander verbunden sind.

6. System nach einem der beiden vorhergehenden Ansprüche, **dadurch gekennzeichnet, dass** der Nahrungsmittelblock (1) eine geometrische Grundkörperform, insbesondere die Form eines Zylinders, einer Kugel, eines Quaders oder Würfels oder eines drei- oder mehrseitigen Prismas, oder eines Abschnittes einer Grundkörperform aufweist und/oder dass die Kanten der Grundkörperform des Nahrungsmittelblockes (1) eingezogen, ausgebaucht und/oder abgerundet ausgebildet sind.

7. System nach einem der vorhergehenden Ansprüche, **dadurch gekennzeichnet, dass** der Nahrungsmittelblock (1) wenigstens eine längs einer flachen oder gekrümmten Ebene verlaufende Oberfläche aufweist, in die zur Bildung einer Sollbruchlinie oder zur Vergrößerung der Oberfläche des Nahrungsmittelblockes (1), insbesondere gekrümmte oder geradlinige Vertiefungen (3) eingebracht sind, die insbesondere ein symmetrisches Muster auf der Oberfläche des Nahrungsmittelblockes (1) bilden und/oder geradlinig sind und wenigstens zwei zueinander im rechten Winkel angeordnete Vertiefungen (3) umfassen.

8. System nach dem vorhergehenden Anspruch, **dadurch gekennzeichnet, dass** der Bereich zwischen den Vertiefungen (3) derart geformt ist, dass er eine konvexe oder eine konkave Oberfläche aufweist, und der Nahrungsmittelblock (1) zumindest ein Paar von gegenüberliegenden Oberflächen aufweist, wobei einander gegenüberliegende Vertiefungen (3) vorgesehen sind.

9. System nach einem der vorhergehenden Ansprüche, **dadurch gekennzeichnet, dass** wenigstens ein Nahrungsmittelblock (1) vorgesehen ist, der eine Mehrzahl von Durchgangsöffnungen (2) aufweist, die insbesondere auf einer um den Schwerpunkt des Nahrungsmittelblockes (1) herumverlaufenden, rechteckigen, quadratischen, elliptischen oder kreisförmigen virtuellen Linie angeordnet sind.

10. System nach einem der vorhergehenden Ansprüche, **dadurch gekennzeichnet, dass** das System umfasst:
• wenigstens einen Nahrungsmittelblock (1), der aus einem Lebensmittel gefertigt ist, das bei Raumtemperatur formstabil ist, oder mehreren Lebensmitteln gefertigt ist, die bei Raumtemperatur formstabil sind,
• einen gefrorenen Nahrungsmittelblock (1), der aus einem oder mehreren Lebensmitteln gefertigt ist, die nach Auftauen derart instabil sind, dass der Nahrungsmittelblock (1) beim Auftauen oder Erhitzen selbsttätig auseinanderfällt,
• wenigstens einen Nahrungsmittelblock (1), der aus mehreren unterschiedlichen Lebensmitteln besteht,
• wenigstens einen Nahrungsmittelblock (1), der aus mehreren unterschiedlichen Lebensmitteln besteht und zumindest eine feste Komponente und eine bei Raumtemperatur breiige oder feste Komponente aufweist, die sich bei Erhitzen verflüssigt,
• wenigstens einen Nahrungsmittelblock (1), der wenigstens eine Komponente aus gewachsenem Muskelfleisch, gepressten Fleischstücken, Hackfleisch, Fisch oder Fischstücken aufweist oder vollständig aus diesen Fleisch- oder Fischkomponenten besteht und/oder
• wenigstens einen Nahrungsmittelblock (1) umfasst, der aus Gemüse oder einer Gemüsemischung besteht oder aus einer Mischung aus Gemüse mit einer Kartoffelkomponente, einer Reiskomponente oder einer Fleisch- oder Fischkomponente besteht.

11. System nach einem der vorhergehenden Ansprüche, **dadurch gekennzeichnet, dass** wenigstens ein Nahrungsmittelblock (1) aus einzelnen Nahrungsmittelblöcken (1) mit gleicher oder unterschiedlicher Konsistenz zusammengesetzt ist, die durch Pressen oder Tieffrieren zu einem einzigen Nahrungsmittelblock (1) oder zu einem Blockkern zusammengefügt sind.

12. System nach einem der vorhergehenden Ansprüche, **dadurch gekennzeichnet, dass** der zusammengefügte Nahrungsmittelblock (1) Sollbruchstellen aufweist, über die er in die einzelnen Nahrungsmittelblöcke (1) teilbar ist, wobei die Sollbruchstellen von Vertiefungen oder von einer weniger adhäsiven Beschichtung der Randbereiche der einzelnen Nahrungsmittelblöcke (1) vor dem Zusammenfügen gebildet sind.

13. System nach einem der vorhergehenden Ansprüche, **dadurch gekennzeichnet, dass** wenigstens ein, bevorzugt mehrere Nahrungsmittelblöcke (1), vorgesehen ist, die in einem bevorzugt rechten Winkel zur Durchgangsöffnung (2) verlaufende Durchlässe (4) zum Ein- oder Durchstecken von Halteelementen, insbesondere von Spießen (5) oder Stielen, aufweisen.

14. System nach einem der vorhergehenden Ansprüche, **dadurch gekennzeichnet, dass** das Heizgerät (8) derart ausgebildet ist, dass der Heizdorn (10) nach einer vordefinierten oder einstellbaren Garzeit selbsttätig in die Ebene der Grilloberfläche zurückgezogen wird, wobei bevorzugt die Grilloberfläche schräg angeordnet ist und unterhalb der Grilloberfläche eine Auffangschale für fertiggegarte Nahrungsmittelblöcke (1) vorgesehen ist.

15. System nach einem der Ansprüche 3 bis 6, **dadurch gekennzeichnet, dass** das Heizgerät (8) ein aktives Heizgerät (8) ist und mehrere, parallel bestückbare Aufnahmen (9) für Nahrungsmittelblöcke (1) oder bevorzugt für wenigstens einen Nahrungsmittelblock (1) oder den Blockkern und zumindest eine weitere Lebensmittellage (7) aufweist und das Heizgerät (8) derart ausgebildet ist, dass die Heiztemperaturen oder Startzeiten der Heizfunktion der einzelnen Aufnahmen (9) derart aufeinander und auf die Art der in den Aufnahmen (9) zu garenden Lebensmittellagen (7) abgestimmt sind, dass die in den einzelnen Aufnahmen (9) positionierten Lebensmittel zu einem gemeinsamen Zeitpunkt fertiggegart sind.

16. System nach einem der vorhergehenden Ansprüche, **dadurch gekennzeichnet, dass** das Heizgerät (8) eine Steuerung und eine Lesevorrichtung für eine Kochanweisung aufweist, wobei den Nahrungsmittelblöcken (1) codierte Kochanweisungen zugeordnet sind, die insbesondere auf einer Verpackung angeordnet sind und von der Lesevorrichtung lesbar sind, und wobei die Steuerung aus der Kochanweisung mittelbar oder unmittelbar ein wenigstens einen Heizprozess umfassendes Garprogramm zu starten und abzulaufen lassen vermag und wobei insbesondere die codierte Kochanweisung in Form eines Bar- oder QR-Codes ausgebildet ist.

17. System nach einem der vorhergehenden Ansprüche, **dadurch gekennzeichnet, dass** das Heizgerät (8) mit einer Verbindungsmöglichkeit mit einem globalen oder lokalen Computernetzwerk versehen ist und Rezepte und/oder Zubereitungsregeln bzw. Abläufe von Heizperioden hinsichtlich der Länge und der Temperaturen über das Computernetzwerk in eine Steuerelektronik einzulesen vermag und nachfolgend das Nahrungsmittel konform zu den Rezepten und/oder Zubereitungsregeln zuzubereiten vermag.

18. System nach einem der vorhergehenden Ansprüche, **dadurch gekennzeichnet, dass** das Heizgerät (8) einen Grundkörper, zumindest einen an dem Grundkörper beweglich gelagerten Deckel und eine Heizvorrichtung zum Aufheizen wenigstens eines Teils des Deckels und/oder des Grundkörpers im Bereich der Aufnahme (9) aufweist, wobei Grundkörper und Deckel derart ausgebildet sind, dass bei auf den Grundkörper abgesenktem Deckel zwischen dem Grundkörper und dem Deckel die Aufnahme (9) gebildet ist oder mehrere Aufnahmen (9) gebildet sind und wobei sich ausgehend von dem Deckel und/oder dem Grundkörper zumindest ein in seiner Formgebung an die Durchgangsöffnungen (2) im Nahrungsmittelblock (1) angepasster Heizdorn (10) in die Aufnahme erstreckt, der bei Schließen des Deckels in die Durchgangsöffnung (2) diese durchsetzend selbsttätig eintaucht.

19. System nach dem vorhergehenden Anspruch, **dadurch gekennzeichnet, dass** der Deckel über ein, ein Hebelgetriebe umfassendes Hebegelenk mit dem Grundkörper verbunden ist, das derart ausgebildet ist, dass sich während einer ersten Teilöffnungsbewegung der Deckel translatorisch vom Grundkörper beabstandet und erst in einer nachfolgenden Teilöffnungsbewegung der Deckel zusätzlich oder alternativ zur translatorischen Bewegung auch verschwenkt ist.

## Claims

1. System for the preparation of foodstuffs provided according to a system for the presentation of foodstuffs, said system comprising a plurality of individual ready-to-prepare food blocks (1) and/or contiguous food blocks (1), each consisting of at least one foodstuff and formed into a basic shape having at least one through-opening (2) formed in the food block (1), wherein
the system comprises a cooking device in the form of a heating device (8) with a receptacle (9) for one or a plurality of food blocks (1) serving as a cooking receptacle, the receptacle (9) comprising a thermally conductive support body with a support for at least one surface of a food block (1) and a heating mandrel (10) projecting at right angles from the support (9), which is dimensioned in such a way that it can be inserted into the through-opening (2), wherein the heating device is an active heating device (8) with an integrated heating device or a passive heating device (8) for insertion into an external cooking device and wherein the heating mandrel (10) is adapted in its shape to the through-opening (2) in the food block (1).

2. System according to claim 1, **characterized in that** the receptacle (9) has two grill grids which can be adjusted against each other, between which one or more food blocks (1) can be clamped, and the heating mandrel (10) has in particular a length which corresponds to the depth of the through-opening (2) in the food block (1).

3. System according to one of the preceding claims, **characterized in that** the food blocks (1) as input component for the preparation are composed of several raw or pre-cooked food layers (7) and a block core consisting of a food or a food mixture, wherein the food layers (7) and the block core have an identical base area or a base area which deviates by a maximum of 20% in the longitudinal and transverse extent of the base area of the block core or another food layer (7).

4. System according to the preceding claim, **characterized in that** the foodstuff layers (7) are meat layers, fish layers, seasoning layers, cheese or bacon layers, chocolate layers, sugar layers, pasta layers and/or bread layers, from which at least one, preferably several, foodstuff blocks (1) can be assembled from several foodstuff layers (7) arranged one above the other.

5. System according to one of the two preceding claims, **characterized in that** the block core and the food layers (7) are positively connected to one another in the transverse direction after stacking one on top of the other, in particular via mutually corresponding, embossed and/or raised regions.

6. System according to one of the two preceding claims, **characterized in that** the food block (1) has a geometric basic body shape, in particular the shape of a cylinder, a sphere, a cuboid or cube or a three-sided or multi-sided prism, or a section of a basic body shape and/or **in that** the edges of the basic body shape of the food block (1) are embodied, bulged and/or rounded.

7. System according to one of the preceding claims, **characterized in that** the food block (1) has at least one surface running along a flat or curved plane, in which, in order to form a desired breaking line or to enlarge the surface of the food block (1), in particular curved or rectilinear depressions (3) are made, which in particular form a symmetrical pattern on the surface of the food block (1) and/or are rectilinear and comprise at least two depressions (3) arranged at right angles to one another.

8. System according to the preceding claim, **characterized in that** the area between the depressions (3) is shaped to have a convex or a concave surface, and the food block (1) has at least one pair of opposing surfaces, wherein mutually opposing depressions (3) are provided.

9. System according to any one of the preceding claims, **characterized in that** at least one food block (1) is provided having a plurality of through-openings (2) arranged in particular on a rectangular, square, elliptical or circular virtual line extending around the center of gravity of the food block (1).

10. System according to any one of the preceding claims, **characterized in that** the system comprises:
• at least one food block (1) made of one food product that is dimensionally stable at room temperature, or several food products that are dimensionally stable at room temperature,
• a frozen food block (1) made of one or more foodstuffs which are unstable after thawing in such a way that the food block (1) automatically falls apart when thawed or heated,
• at least one food block (1) consisting of several different foods,
• at least one food block (1) consisting of a plurality of different foodstuffs and comprising at least one solid component and one component which is pulpy or solid at room temperature and which liquefies when heated,
• at least one food block (1) comprising at least one component of grown muscle meat, pressed meat pieces, minced meat, fish or fish pieces or consisting entirely of these meat or fish components and/or
• at least one food block (1) consisting of vegetables or a mixture of vegetables or consisting of a mixture of vegetables with a potato component, a rice component or a meat or fish component.

11. System according to any one of the preceding claims, **characterized in that** at least one food block (1) is composed of individual food blocks (1) of the same or different consistency, which are joined together by pressing or deep freezing to form a single food block (1) or a block core.

12. System according to one of the preceding claims, **characterized in that** the assembled food block (1) has predetermined breaking points via which it can be divided into the individual food blocks (1), the predetermined breaking points being formed by depressions or by a less adhesive coating of the edge regions of the individual food blocks (1) before assembly.

13. System according to one of the preceding claims, **characterized in that** at least one, preferably several, food blocks (1) are provided which have passages (4) running at a preferably right angle to the through-opening (2) for inserting or passing through holding elements, in particular skewers (5) or sticks.

14. System according to one of the preceding claims, **characterized in that** the heating device (8) is embodied in such a way that the heating mandrel (10) is automatically retracted into the plane of the grill surface after a predefined or adjustable cooking time, the grill surface preferably being arranged obliquely and a collecting tray for fully cooked seam blocks (1) being provided below the grill surface.

15. System according to one of the claims 3 to 6, **characterized in that** the heating device (8) is an active heating device (8) and has a plurality of receptacles (9) for food blocks (1) or preferably for at least one food block (1) or the block core and at least one further food layer (7), wherein the receptacles (9) can be equipped in parallel, and the heating device (8) is embodied in such a way that the heating temperatures or starting times of the heating function of the individual receptacles (9) are coordinated with one another and with the type of food layers (7) to be cooked in the receptacles (9) in such a way that the foods positioned in the individual receptacles (9) are fully cooked at a common time.

16. System according to one of the preceding claims, **characterized in that** the heating device (8) has a controller and a reading device for a cooking instruction, the food blocks (1) being assigned coded cooking instructions which are arranged in particular on a package and can be read by the reading device, and the controller being able to start and run a cooking program comprising at least one heating process indirectly or directly from the cooking instruction, and in particular the coded cooking instruction being embodied in the form of a bar code or QR code.

17. System according to one of the preceding claims, **characterized in that** the heating device (8) is provided with a possibility of connection to a global or local computer network and is capable of reading recipes and/or preparation rules or sequences of heating periods with regard to the length and the temperatures into control electronics via the computer network and is subsequently capable of preparing the food in conformity with the recipes and/or preparation rules.

18. System according to one of the preceding claims, **characterized in that** the heating device (8) has a base body, at least one lid embodied movably on the base body, and a heating device for heating at least a part of the lid and/or of the base body in the region of the receptacle (9), the base body and lid being embodied in such a manner that, when the lid is lowered onto the base body, the receptacle (9) is formed or a plurality of receptacles (9) are formed between the base body and the lid, and wherein, starting from the lid and/or the base body, at least one heating mandrel (10) which is adapted in its shape to the through-openings (2) in the food block (1) extends into the receptacle and, when the lid is closed, automatically dips into the through-opening (2), penetrating the latter.

19. System according to the preceding claim, **characterized in that** the lid is connected to the base body via a lifting joint comprising a lever mechanism, which is embodied in such a way that during a first partial opening movement the lid is translationally spaced apart from the base body and only in a subsequent partial opening movement is the lid also pivoted in addition or as an alternative to the translational movement.

## Revendications

1. Système de préparation d'aliments fournis selon un système de présentation d'aliments, le système comprenant une pluralité de blocs d'aliments (1) individuels prêts à être préparés et/ou de blocs d'aliments (1) associés, chacun étant constitué d'au moins un aliment et étant formé en une forme de base qui présente au moins une ouverture de passage (2) formée dans le bloc d'aliments (1), **dans lequel**
le système comprend un appareil de cuisson sous la forme d'un appareil de chauffage (8) avec un logement (9) servant de réception de cuisson pour un ou plusieurs blocs d'aliments (1), le logement (9) comprenant un corps de support thermiquement conducteur avec un support pour au moins une surface d'un bloc d'aliments (1) et un mandrin de chauffage (10) faisant saillie à angle droit du support (9), qui est dimensionné de manière à pouvoir être inséré dans l'ouverture de passage (2), l'appareil de chauffage étant un appareil de chauffage actif (8) avec un dispositif de chauffage intégré ou un appareil de chauffage passif (8) destiné à être inséré dans un dispositif de cuisson externe et la forme de la broche chauffante (10) étant adaptée à l'ouverture de passage (2) dans le bloc d'aliments (1).

2. Système selon la revendication 1, **caractérisé en ce que** le logement (9) comporte deux grilles réglables l'une par rapport à l'autre, entre lesquelles un ou plusieurs blocs d'aliments (1) peuvent être serrés, et **en ce que** le mandrin chauffant (10) présente notamment une longueur correspondant à la profondeur de l'ouverture de passage (2) dans le bloc d'aliments (1).

3. Système selon l'une des revendications précédentes, **caractérisé en ce que** les blocs d'aliments (1), en tant que composant d'entrée pour la préparation, sont composés de plusieurs couches d'aliments (7) crus ou précuits et d'un noyau de bloc constitué d'un aliment ou d'un mélange d'aliments, les couches d'aliments (7) et le noyau de bloc présentant une surface de base identique ou une surface de base qui s'écarte de la surface de base du noyau de bloc ou d'une autre couche d'aliments (7) d'au maximum 20 % dans l'étendue longitudinale et transversale.

4. Système selon la revendication précédente, **caractérisé en ce que** les couches d'aliments (7) sont des couches de viande, des couches de poisson, des couches d'épices, des couches de fromage ou de lard, des couches de chocolat, des couches de sucre, des couches de pâtes alimentaires et/ou des couches de pain, à partir desquelles au moins un, de préférence plusieurs blocs d'aliments (1) peuvent être composés de plusieurs couches d'aliments (7) disposées les unes au-dessus des autres.

5. Système selon l'une des deux revendications précédentes, **caractérisé en ce que** le noyau du bloc et les couches d'aliments (7) sont reliés entre eux par complémentarité de forme dans le sens transversal après l'empilement les uns sur les autres, en particulier par des zones estampées et/ou en relief qui se correspondent.

6. Système selon l'une des deux revendications précédentes, **caractérisé en ce que** le bloc d'aliments (1) présente une forme géométrique de corps de base, en particulier la forme d'un cylindre, d'une sphère, d'un parallélépipède ou d'un cube ou d'un prisme à trois ou plusieurs faces, ou d'un segment d'une forme de corps de base et/ou **en ce que** les arêtes de la forme de corps de base du bloc d'aliments (1) sont réalisées en retrait, bombées et/ou arrondies.

7. Système selon l'une quelconque des revendications précédentes, **caractérisé en ce que** le bloc d'aliments (1) présente au moins une surface s'étendant le long d'un plan plat ou incurvé, dans laquelle, pour former une ligne de rupture ou pour agrandir la surface du bloc d'aliments (1), sont ménagées des cavités (3), en particulier courbes ou rectilignes, qui forment en particulier un motif symétrique sur la surface du bloc d'aliments (1) et/ou sont rectilignes et comprennent au moins deux cavités (3) disposées à angle droit l'une par rapport à l'autre.

8. Système selon la revendication précédente, **caractérisé en ce que** la zone entre les cavités (3) est formée de manière à présenter une surface convexe ou concave, et le bloc d'aliments (1) présente au moins une paire de surfaces opposées, des cavités (3) étant prévues à l'opposé les unes des autres.

9. Système selon l'une quelconque des revendications précédentes, **caractérisé en ce qu'**il est prévu au moins un bloc d'aliments (1) comportant une pluralité d'ouvertures de passage (2) disposées notamment sur une ligne virtuelle rectangulaire, carrée, elliptique ou circulaire entourant le centre de gravité du bloc d'aliments (1).

10. Système selon l'une quelconque des revendications précédentes, **caractérisé en ce que** le système comprend :
• Au moins un bloc d'aliments (1) fabriqué à partir d'un aliment qui est indéformable à température ambiante ou de plusieurs aliments qui sont indéformables à température ambiante,
• Un bloc d'aliments congelé (1) constitué d'un ou de plusieurs aliments qui, après décongélation, sont instables de telle sorte que le bloc d'aliments (1) se désintègre automatiquement lors de la décongélation ou du chauffage,
• Au moins un bloc d'aliments (1) composé de plusieurs aliments différents,
• Au moins un bloc d'aliments (1) qui est constitué de plusieurs aliments différents et qui présente au moins un composant solide et un composant pâteux ou solide à température ambiante, qui se liquéfie lorsqu'il est chauffé,
• Au moins un bloc d'aliments (1) qui présente au moins un composant de viande musculaire développée, de morceaux de viande pressés, de viande hachée, de poisson ou de morceaux de poisson ou qui est entièrement constitué de ces composants de viande ou de poisson et/ou
• Au moins un bloc d'aliments (1) constitué de légumes ou d'un mélange de légumes ou constitué d'un mélange de légumes avec un composant de pomme de terre, un composant de riz ou un composant de viande ou de poisson.

11. Système selon l'une des revendications précédentes, **caractérisé en ce qu'**au moins un bloc d'aliments (1) est composé de blocs alimentaires individuels (1) de consistance identique ou différente, qui sont assemblés par pressage ou surgélation en un seul bloc d'aliments (1) ou en un noyau de bloc.

12. Système selon l'une des revendications précédentes, **caractérisé en ce que** le bloc d'aliments (1) assemblé présente des points de rupture par lesquels il peut être divisé en blocs alimentaires individuels (1), les points de rupture étant formés par des creux ou par un revêtement moins adhérent des zones de bordure des blocs d'aliments (1) individuels avant l'assemblage.

13. Système selon l'une des revendications précédentes, **caractérisé en ce qu'**il est prévu au moins un, de préférence plusieurs blocs d'aliments (1), qui présentent des passages (4) s'étendant de préférence à angle droit par rapport à l'ouverture de passage (2) pour l'insertion ou le passage d'éléments de maintien, en particulier de piques (5) ou de manches.

14. Système selon l'une des revendications précédentes, **caractérisé en ce que** l'appareil de chauffage (8) est conçu de telle sorte que la broche de chauffage (10) est automatiquement retirée dans le plan de la surface du gril après un temps de cuisson prédéfini ou réglable, la surface du gril étant de préférence disposée en biais et un bac collecteur pour les blocs d'aliments (1) dont la cuisson est terminée étant prévu en dessous de la surface du gril.

15. Système selon l'une des revendications 3 à 6, **caractérisé en ce que** l'appareil de chauffage (8) est un appareil de chauffage actif (8) et présente plusieurs logements (9) pouvant être équipés en parallèle pour des blocs d'aliments (1) ou de préférence pour au moins un bloc d'aliments (1) ou le noyau du bloc et au moins une autre couche d'aliments (7) et l'appareil de chauffage (8) est conçu de telle sorte, que les températures de chauffage ou les temps de démarrage de la fonction de chauffage des différents logements (9) sont adaptés les uns aux autres et au type de couches d'aliments (7) à cuire dans les logements (9) de telle sorte que les aliments positionnés dans les différents logements (9) sont cuits à un moment commun.

16. Système selon l'une des revendications précédentes, **caractérisé en ce que** l'appareil de chauffage (8) présente une commande et un dispositif de lecture pour une instruction de cuisson, des instructions de cuisson codées étant associées aux blocs d'aliments (1), lesquelles sont notamment disposées sur un emballage et peuvent être lues par le dispositif de lecture, et la commande permettant de démarrer et de faire se dérouler directement ou indirectement, à partir de l'instruction de cuisson, un programme de cuisson comprenant au moins un processus de chauffage, et l'instruction de cuisson codée étant notamment réalisée sous la forme d'un code-barres ou d'un code QR.

17. Système selon l'une des revendications précédentes, **caractérisé en ce que** l'appareil de chauffage (8) est pourvu d'une possibilité de connexion à un réseau informatique global ou local et est capable de lire dans une électronique de commande, par l'intermédiaire du réseau informatique, des recettes et/ou des règles de préparation ou des déroulements de périodes de chauffage en ce qui concerne la longueur et les températures et est capable de préparer ensuite les aliments conformément aux recettes et/ou aux règles de préparation.

18. Système selon l'une des revendications précédentes, **caractérisé en ce que** l'appareil de chauffage (8) présente un corps de base, au moins un couvercle monté mobile sur le corps de base et un dispositif de chauffage pour chauffer au moins une partie du couvercle et/ou du corps de base dans la zone du logement (9), le corps de base et le couvercle étant conçus de telle manière, que, lorsque le couvercle est abaissé sur le corps de base, le logement (9) est formé entre le corps de base et le couvercle ou que plusieurs logements (9) sont formés, et dans lequel, en partant du couvercle et/ou du corps de base, au moins une broche chauffante (10), dont la forme est adaptée aux ouvertures de passage (2) dans le bloc d'aliments (1), s'étend dans le logement et, lorsque le couvercle est fermé, plonge automatiquement dans l'ouverture de passage (2) en la traversant.

19. Système selon la revendication précédente, **caractérisé en ce que** le couvercle est relié au corps de base par une articulation à levier comprenant un mécanisme à levier, qui est conçu de telle sorte que pendant un premier mouvement d'ouverture partielle, le couvercle s'écarte du corps de base en translation et que ce n'est que dans un mouvement d'ouverture partielle suivant que le couvercle est également pivoté en plus ou en alternative au mouvement de translation.
